# EUROPÄISCHE PATENTANMELDUNG

(11) **EP 1 128 615 A2**
(43) Veröffentlichungstag der Anmeldung: **29.08.2001**
(21) Anmeldenummer: 01710008.2
(22) Anmeldetag: 06.02.2001
(51) Int. Cl.: H04L 12/58, H04L 29/06

(54) **Verfahren und Kommunikationseinrichtung zur Verschlüsselung von E-Mail**

(30) Priorität: 21.02.2000 DE 10008519
(71) Anmelder: DICA Technologies AG, 10245 Berlin (DE)
(72) Erfinder: Fredette, Paul H., Portsmouth, RI 02871 (US); Murray, Jason, West Greenwich, RI 02817 (US); Treciokas, Paul R., Middletown, RI 02842 (US); Helbig, Klaus, 12459 Berlin (DE); Weber, Karl-Heinz, 13051 Berlin (DE); Jacob, Hans-Jürgen, 10365 Berlin (DE)
(74) Vertreter: Kailuweit, Frank, Dr. Dipl.-Ing.

(57) **Zusammenfassung**

Die Erfindung betrifft ein Verfahren und Kommunikationseinrichtungen zum Aufbau von gesicherten E-Mail-Verkehr zwischen Domänen am Internet unter Nutzung von Security Associations, bei dem die E-Mail mindestens eine Kommunikationseinrichtung durchlaufen, die über ein Verzeichnis von Security Associations verfügt, und bei dem die Kommunikationseinrichtung der Sende-Domain den Namen der Ziel-Domain jeder der vom Mail-Server der eigenen Domain erhaltenen E-Mail gegen ein Verzeichnis von existierenden Security Associations (SA) prüft. Bei fehlendem Verzeichniseintrag wird die E-Mail mit einer Kennung der Kommunikationseinrichtung versehen und an den Empfänger weitergeleitet, empfängerseitig die E-Mail transparent an den Empfänger übergeben, wenn keine artgleiche Kommunikationseinrichtung vorhanden ist, empfängerseitig beim Auftreffen auf eine artgleiche Kommunikationseinrichtung die empfangene E-Mail von der empfangenden Kommunikationseinrichtung auf eine Kennung geprüft und an den Empfänger weitergeleitet. Bei existierendem Verzeichniseintrag wird die E-Mail auf Basis der Sicherheitsparameter der Security Association durch die Kommunikationseinrichtung gesichert an die Ziel-Domain gesendet.

## Beschreibung

Die Erfindung betrifft ein Verfahren und Kommunikationseinrichtungen zum Aufbau von gesicherten E-Mail-Verkehr zwischen Domänen am Internet unter Nutzung von Security Associations
- zur Geheimhaltung des Inhalts von E-Mails,
- zur Sicherung der Integrität des Inhalts von E-Mails sowie
- zum Schutz der Identität von Sender und Empfänger
bei der Übertragung von E-Mail über unsichere IP-Netzwerke.

Es ist allgemein bekannt, das E-Mail zu den unsichersten Diensten des Internets gehört.
E-Mail-Inhalte werden auf ihrem Wege über das Internet sowohl als IP-Pakete (z.B. aufRoutern) als auch als komplette Mails (z.B. auf Relay Servern) stets offen abgelegt und können somit mit geringem Aufwand von unbefugten Personen gelesen bzw. manipuliert werden.

US 4,962,532 und EP 375 138 B1 beinhalten den Austausch von elektronischen Nachrichten in Netzwerken. Beschrieben wird ein Verfahren zur Steuerung der Zustellung von elektronischen Nachrichten inklusive der Übertragung von Meldungen an Sender und Empfänger unzustellbarer Nachrichten. Mit der elektronischen Nachricht wird ein Nachrichtenprofil übertragen, welches beim Empfänger mit dessen Systemprofil verglichen wird. Eine Zustellung der Nachricht erfolgt nur, wenn das Systemprofil den Anforderungen des jeweiligen Nachrichtenprofils genügt. Das Nachrichtenprofil kann auch eine verschlüsselte Übertragung festlegen.

Hintergrund von US 5 787 177 ist der entfernte Zugang von Benutzern zu lokalen oder globalen Ressourcen eines Netzwerkes. Beschrieben wird ein Verfahren zur Steuerung der Zugriffsberechtigungen von Nutzern zu Ressourcen. Dazu werden zwischen Objekten im Netzwerk Security Associations aufgebaut, die festlegen, ob, wann und wie diese Objekte untereinander und mit Dritten kommunizieren können.

US 5,493,692 beschreibt die kontrollierte Zustellung elektronischer Nachrichten auf der Basis von Privatsphäre, Priorität und textabhängigen Attributen. Diese Informationen werden in user profiles gespeichert und durch einen User Agent ausgewertet.

US 4,672,572 beinhaltet die kontrollierte Kommunikation zwischen Terminals und Host-Computern über ein zusätzliches Protector Device. Dieses beinhaltet Erkennungsmittel für z.B. Zugangskontrolle, Kommando-Filterung oder auch Verschlüsselungsdienste.

DE 197 41 246 A1 beschreibt die sichere Übermittlung von Informationen zwischen Firewalls über ein ungeschütztes Netzwerk auf der Basis des IPSEC-Standards. Proxy-Firewalls auf Anwendungsebene können ihre Arbeit aber nur dann ausführen, wenn sie die Daten in unverschlüsselter Form bereitgestellt bekommen. Die Erfindung entschlüsselt daher Daten vor Weiterleitung an die Proxies auf der IP-Ebene und führt entsprechende Authentifizierungsverfahren durch.

Mit Hilfe der Kryptografie kann die E-Mail-Kommunikation über das Internet sicherer gemacht werden. Dafür werden zur Zeit 3 verschiedene Techniken angeboten:
a) Benutzerbezogene E-Mail-Sicherheit durch Verschlüsselung von Mails auf dem Mail- Client bzw. auf einem Mail-Server/Mail Proxy
b) Verbindungsbezogene E-Mail-Sicherheit durch Verschlüsselung aller IP-Pakete eines IP-Tunnels (Virtual Privat Network)
c) Domänen-bezogene E-Mail-Sicherheit durch Verschlüsselung von Mails auf einem Mail-Gateway/Mail Proxy unter Verwendung von Gruppenzertifikaten

Die Techniken unter a) unterziehen den Inhalt einzelner E-Mails zwischen Endnutzern kryptographischer Verfahren. Diese benutzerbezogene E-Mail-Sicherheit stellt alle Leistungsmerkmale des Mail-Dienstes bereit, jedoch auf Kosten eines hohen organisatorischen Aufwandes für die zugrunde liegende Public Key Encryption (Public Key Infrastructure - PKI) auf Basis einer Ende-zu-Ende-Sicherheit zwischen Benutzern. Der Stand der Technik ist u.a. in [S/MIME Version 3 Message Specification RFC 2633, Juni 1999] und [S/MIME Version 3 Certificate Handling RFC 2632, Juni 1999] beschrieben.

Die Techniken unter b) nutzen kryptographische Verfahren für die Sicherung des gesamten Datentransportes zwischen zwei Mail-Servern bzw. Netzwerken. Bei den verbindungsbezogenen Techniken können keine store-and-foreward Leistungsmerkmale des Mail-Dienstes bereitgestellt werden. Der Stand der Technik ist u.a. in [Security Architecture for the Internet Protocol, RFC 2401, November 1998] und [The TLS Protocol Version 1.0, RFC 2246, Januar 1999] beschrieben.

Die Techniken unter c) dienen der Sicherung von E-Mail zwischen Sicherheitsdomänen des Internet auf Basis von Domain Encryption/Decryption und Domain Signature. Unter Beibehaltung aller store-and-foreward Leistungsmerkmale des Mail-Dienstes ersetzen diese als "Domain Security Services" bezeichneten Verfahren die pro Benutzer ausgegebenen Zertifikate durch ein Gruppenzertifikat für alle Benutzer einer Sicherheitsdomäne. Dadurch verringert sich der Aufwand für die Realisierung der Public Key Encryption erheblich. Der Stand der Technik ist u.a. in [Domain Security Services using S/MIME, Internet-Draft, 1999] beschrieben.

Den genannten 3 Techniken unter a), b) und c) ist der hohe zusätzliche Aufwand gemeinsam, der für die Sicherung von E-Mail durch Administratoren bzw. Benutzer zu tragen ist und damit die Nutzung des E-Mail-Dienstes erschwert. So sind zusätzliche Netzwerk- bzw. Software-Komponenten in das IT-Netzwerk einzubinden und Entscheidungen über die offene oder sichere Übertragung einer E-Mail zu treffen. Dadurch sind vorgenannte Techniken nur in geringem Maße skalierbar und damit nur schlecht vereinbar mit dem Anspruch der offenen Architektur des Internets.

Die Aufgabe der angemeldeten Erfindung besteht deshalb in der Schaffung eines Verfahrens und von Einrichtungen zum Aufbau von gesicherten E-Mail-Verkehr zwischen Mail-Domains des Internet, die transparent zu allen anderen Netzkomponenten (Netzwerktransparenz), transparent für den Sender/Empfänger von Mail (Benutzertransparenz) und ohne manuelle Eingriffe (Bedienungsfreiheit) funktionieren.

Erfindungsgemäß wird die Aufgabe durch ein Verfahren zum Aufbau von gesicherten E-Mail-Verkehr zwischen Domänen am Internet unter Nutzung von Security Associations gelöst, bei dem die E-Mail mindestens eine Kommunikationseinrichtung durchlaufen, die über ein Verzeichnis von Security Associations verfügt, und bei dem die Kommunikationseinrichtung der Sende-Domain den Namen der Ziel-Domain jeder der vom Mail-Server der eigenen Domain erhaltenen E-Mail gegen ein Verzeichnis von existierenden Security Associations (SA) prüft.

Bei fehlendem Verzeichniseintrag wird
die E-Mail mit einer Kennung der Kommunikationseinrichtung versehen und an den Empfänger weitergeleitet,
empfängerseitig die E-Mail transparent an den Empfänger übergeben, wenn keine artgleiche Kommunikationseinrichtung vorhanden ist,
empfängerseitig beim Auftreffen auf eine artgleiche Kommunikationseinrichtung die empfangene E-Mail von der empfangenden Kommunikationseinrichtung auf eine Kennung geprüft und an den Empfänger weitergeleitet.

Eine empfangene Kennung führt zur Übertragung der Sicherheitsparameter der eigenen Domain an die Kommunikationseinrichtung der Sender-Domain über gesicherte E-Mail.

Dabei empfangene Sicherheitsparameter führen zur Übertragung der eigenen Sicherheitsparameter der Domain an die Kommunikationseinrichtung der jeweils anderen Domain über gesicherte E-Mail, sofern diese nicht bereits übertragen wurden, und zur Eintragung von Sicherheitsparametern in das Verzeichnis von Security Associations.

Bei existierendem Verzeichniseintrag wird die E-Mail auf Basis der Sicherheitsparameter der Security Association durch die Kommunikationseinrichtung gesichert an die Ziel-Domain gesendet. Die Kommunikationseinrichtung der Ziel-Domain macht auf Basis der Sicherheitsparameter der Security Association die Sicherung der E-Mail rückgängig und leitet diese an den für die Domain zuständigen Mail Server.

In einer vorteilhaften Ausgestaltung der Erfindung wird das erfindungsgemäße Verfahren so geführt, daß bei fehlendem Verzeichniseintrag
die Kommunikationseinrichtung per E-Mail den Aufbau einer Security Association anfordert,
bei Zustandekommen einer Security Association die E-Mail gesichert überträgt,
und bei Nichtzustandekommen einer Security Association die E-Mail an den Absender als nicht gesichert zustellbar zurückgegeben wird.

Bei existierendem Verzeichniseintrag fragt die Kommunikationseinrichtung per E-Mail die momentane Verfügbarkeit einer Security Association ab. Bei Verfügbarkeit einer Security Association wird die E-Mail gesichert übertragen. Bei Nichtverfügbarkeit einer Security Association wird die E-Mail an den Absender als nicht gesichert zustellbar zurückgegeben.

Das erfindungsgemäße Verfahren ist ein selbstlernendes Verfahren zur Benutzer- und Netzwerk-Transparenten Sicherung von E-Mail-Verkehr zwischen Mail-Domains des Internet. Der Selbstlem-Algorithmus bezieht sich dabei auf das Lernen von Kommunikationseinrichtungen im Internet und den automatischen Austausch von Sicherheitsparametern zum Aufbau von Security Associations über E-Mail.
Das erfindungsgemäße Verfahren zeichnet sich dadurch aus, daß nur diejenigen Mail-Domains gelernt werden, zwischen denen wirklich Mail-Verkehr stattfindet. Nach Übertragung einer ersten offenen Mail zu einer Domain, die ebenfalls durch eine solche Kommunikationseinrichtung gesichert ist, beginnt der Aufbau einer Security Association (SA) zwischen den beiden Kommunikationseinrichtungen. Sobald die Security Association aufgebaut ist, werden alle weiteren Mails gesichert übertragen, ohne irgendeine Aktivität der Benutzer.

In einer vorteilhaften Ausgestaltung des Verfahrens erfolgt bei Verfügbarkeit einer Security Association die Datenkommunikation zwischen Benutzer und Kommunikationseinrichtung auf direktem Weg und über eine gesicherte Verbindung, z. Bsp. unter Nutzung des HTTPS-Protokolls. Dazu gibt der Benutzer über eine sichere Schnittstelle seine Nachricht und ein oder mehrere Empfängeradressen in die Kommunikationseinrichtung ein. Die Kommunikationseinrichtung bildet einen Identifikator und übermittelt diesen mit den Empfängeradressen an den Mailserver. Der Mailserver veranlaßt die Versendung der mail über die Kommunikationseinrichtung, die anhand des Identifikators die gesicherte Nachricht anhängt. Empfängerseitig wird die eingehende, mit einem Identifikator versehene mail erkannt. Die gesicherte Nachricht wird entnommen und in der Kommunikationseinrichtung abgelegt. Dem Empfänger wird der Identifikator übergeben. Unter Nutzung dieses Identifikators kann er dann auf direktem Weg zur Kommunikationseinrichtung die gesicherte Nachricht abholen.

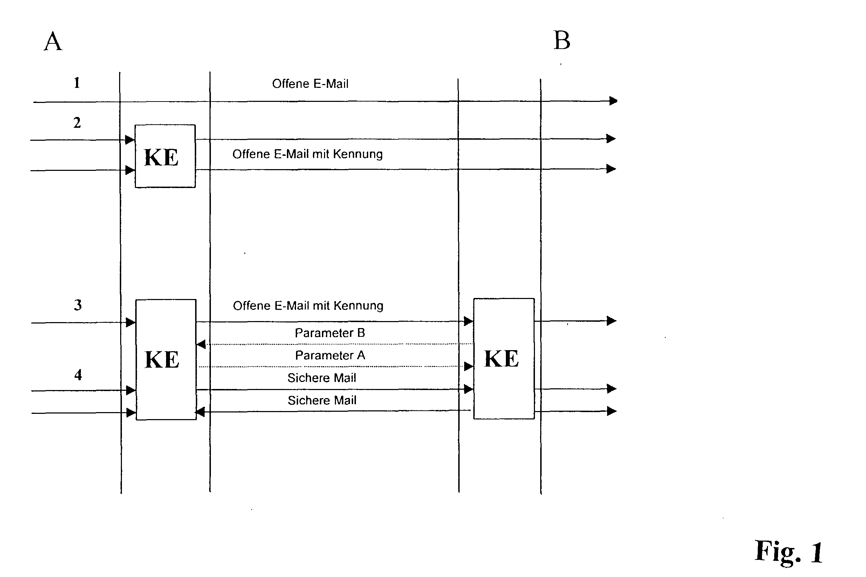

In **Fig. 1** wird der Ablauf des Verfahrens in Verfahrensschritten dargestellt:
**1** Ohne Kommunikationseinrichtungen laufen alle E-Mails zwischen den Domainen A und B offen über das Internet.
**2** Domain A erhält eine Kommunikationseinrichtung (KE). Alle ausgehenden E-Mails erhalten durch die Kommunikationseinrichtung eine Kennung. Die Kennung ist für die Benutzer in den Domains transparent.
**3** Domain B erhält ebenfalls eine Kommunikationseinrichtung. Empfängt diese Kommunikationseinrichtung eine E-Mail von Domain A mit Kennung, so sendet sie per gesicherter E-Mail ihre Sicherheitsparameter zur Kommunikationseinrichtung in Domain A, die daraufhin zu Domain B eine Security Association einrichtet. Die Kommunikationseinrichtung in Domain A sendet ihrerseits ihre Sicherheitsparameter zur Kommunikationseinrichtung in Domain B, die daraufhin zu Domain A eine Security Association einrichtet.
**4** Nach Einrichtung der Security Associations wird jede E-Mail zwischen den Domainen A und B bzw. B und A gesichert übertragen und auf Basis der Sicherheitsparameter wieder in eine offene Mail umgewandelt.

Das Verfahren für den Austausch der Sicherheitsparameter wird immer dann aktiviert, wenn
- die erste offene E-Mail zwischen einer existierenden Kommunikationseinrichtung und einer neu installierten Kommunikationseinrichtung ausgetauscht wird oder
- die erste offene E-Mail zwischen einer neu installierten Kommunikationseinrichtung und einer existierenden Kommunikationseinrichtung ausgetauscht wird

Auf diese Art und Weise lernt jede Kommunikationseinrichtung eine Liste mit Sicherheitsparametern aller Kommunikationseinrichtungen, mit denen E-Mail-Verkehr besteht (SA-Datenbasis). Nur ein Eintrag in dieser SA-Datenbasis entscheidet darüber, ob zwischen 2 Domains eine offene oder gesicherte E-Mail übertragen wird.

In einer vorteilhaften Ausgestaltung der Erfindung wird das Verfahren dahingehend modifiziert, daß ein Benutzer durch Angabe einer zusätzlichen Markierung in der E-Mail Kontrolle über die sichere Übertragung von E-Mail erlangt:
- Eine E-Mail wird in keinem Falle offen übertragen.
- Sind in der SA-Datenbasis für die angegebene Empfänger-Domain keine SicherheitsParameter enthalten, so versucht die Kommunikationseinrichtung diese anzufordern.
- Sind keine Sicherheitsparameter verfügbar und können diese auch nicht beschafft werden, so wird die E-Mail an den Absender als nicht sicher zustellbar zurückgegeben.

Das erfindungsgemäße Verfahren ist mittels unterschiedlicher Kommunikationseinrichtungen realisierbar. Die das Verfahren realisierenden Kommunikationseinrichtungen können dabei in 4 Klassen unterteilt werden:
- Klasse A:: Netzwerk-Transparente Encryption Box im Mail-Modus
- Klasse B:: Netzwerk-Transparente Encryption Box im Paket-Modus
- Klasse C:: Zusatzkomponente für IP-Gerät mit Mail-Server
- Klasse D:: Zusatzkomponente für IP-Gerät ohne Mail-Server

### Kommunikationseinrichtung der Klasse A

Die Kommunikationseinrichtung der Klasse A zum Aufbau von gesicherten E-Mail-Verkehr zwischen Domänen am Internet unter Nutzung von Security Associations besteht im wesentlichen aus Schnittstellenmodulen, einem Prozessor, einem Arbeitsspeicher und Programmspeicher, einem Kryptomudul, einer Stromversorgung, sowie entsprechenden elektrischen Verbindungen und einem Bus für den Adress- und Datenaustausch. Sie ist dadurch gekennzeichnet,
daß sie zwei Schnittstellen besitzt, über welche sie in das Netzwerk in der Schnittstelle (1) zwischen Netzwerk und Mail-Server oder in der Schnittstelle (2) zwischen Netzwerk und Router eingebunden ist,
daß sie sich durch Autokonfiguration und Selbstlernen von Netzwerkparametern in das existierende Netzwerk ohne Änderungen an Netzkomponenten einfügt,
daß sie durch Filtermechanismen E-Mails aus dem Datenstrom selektieren kann,
daß sie über ein Verzeichnis für Security Associations verfügt,
daß sie durch Autokonfiguration und Selbstlernen von Sicherheitsparametern entsprechend des erfindungsgemäßen Verfahrens mit artgleichen Kommunikationseinrichtungen der Klassen A, B, C oder D gesicherte E-Mails austauschen kann.

Die Kommunikationseinrichtung der Klasse A wird in ein Lokales Netzwerk zwischen Mail Server und Netzwerk bzw. zwischen Internet-Zugang und Netzwerk eingesteckt. Änderungen an Komponenten des Netzwerkes (Router, Gateways) bzw. Mail-Systems (Mail Server, Mail Clients) müssen nicht vorgenommen werden (Netzwerktransparenz). Die Kommunikationseinrichtung selbst konfiguriert sich in einer Art und Weise, wie sie für die Kommunikation im Netzwerk benötigt wird. Für die Kommunikation benötigte Parameter (IP-Adressen, Namen, Routen) werden aus dem Datenstrom in einer Lernphase herausgelesen. Nach dieser Lernphase sorgt ein mehrphasiger Filtermechanismus dafür, das zu sichernde bzw. gesicherte E-Mails aus dem Datenstrom selektiert werden können:
- Durchleitung von nicht IP-Verkehr
- Weiterleitung von nicht Mail-relevantem IP-Verkehr
- Weiterleitung von nicht sicherheitsrelevantem Mail-Verkehr

Die ausgefilterten E-Mails werden dann entsprechend dem erfindungsgemäßen Verfahren weiterbehandelt.

### Kommunikationseinrichtung der Klasse B

Die Kommunikationseinrichtung der Klasse B ist analog der Klasse A aufgebaut und dadurch gekennzeichnet,
daß sie zwei Schnittstellen besitzt, über welche sie in das Netzwerk in der Schnittstelle (1) zwischen Netzwerk und Mail-Server oder in der Schnittstelle (2) zwischen Netzwerk und Router eingebunden ist,
daß sie sich durch Autokonfiguration und Selbstlernen von Netzwerkparametern in das existierende Netzwerk ohne Änderungen an Netzkomponenten einfügt,
daß sie durch Filtermechanismen Datenpakete von E-Mails aus dem Datenstrom selektieren kann,
daß sie über ein Verzeichnis für Security Associations verfügt,
daß sie durch Autokonfiguration und Selbstlernen von Sicherheitsparametern entsprechend des erfindungsgemäßen Verfahrens mit beliebigen artgleichen Kommunikationseinrichtungen der Klassen A, B, C oder D gesicherte E-Mails austauschen kann.

Die Kommunikationseinrichtung der Klasse B wird in ein Lokales Netzwerk zwischen Mail Server und Netzwerk bzw. zwischen Internet-Zugang und Netzwerk eingesteckt. Änderungen an Komponenten des Netzwerkes (Router, Gateways) bzw. Mail-Systems (Mail Server, Mail Clients) müssen nicht vorgenommen werden (Netzwerktransparenz). Die

Die ausgefilterten Datenpakete werden dann entsprechend dem erfindungsgemäßen Verfahren weiterbehandelt.

### Kommunikationseinrichtung der Klasse C

Die Kommunikationseinrichtung der Klasse C zum Aufbau von gesicherten E-Mail-Verkehr zwischen Domänen am Internet unter Nutzung von Security Associations, besteht aus einem Mail-Server bzw. Internet Server mit integriertem Mail Server und Kryptomodul. Sie ist dadurch gekennzeichnet,
daß sie über eine interne Mail-Schnittstelle E-Mails mit dem Mail Server austauschen kann,
daß sie über ein Verzeichnis für Security Associations verfügt,
daß sie durch Autokonfiguration und Selbstlernen von Sicherheitsparametern entsprechend des erfindungsgemäßen Verfahrens nach jeweils einem der Ansprüche 1 bis 4 mit artgleichen Kommunikationseinrichtungen der Klassen A, B, C oder D gesicherte E-Mails austauschen kann.

### Kommunikationseinrichtung der Klasse D

Die Kommunikationseinrichtung der Klasse D ist ein beliebiges IP-fähiges Gerät (z.B.Router, Firewall) und verfügt über ein Verzeichnis für Security Associations. Ein mehrphasiger Filtermechanismus sorgt dafür, das E-Mail-relevante Datenpakete aus dem Datenstrom selektiert werden. Die ausgefilterten E-Mail-Daten werden dann entsprechend dem erfindungsgemäßen Verfahren weiterbehandelt.

Die Kommunikationseinrichtungen der Klassen C und D sind Geräte mit typischer PC-Architektur, die um Kryptomodule erweitert werden.

Die Erfindung wird nachfolgend mittels eines Ausführungsbeispiels für Kommunikationseinrichtungen (KE) der Klasse A (nachfolgend als Box bezeichnet) anhand beigefügter Zeichnungen näher erläutert. Dabei zeigen:
- Fig. 2: Position der Box im Netzwerk
- Fig. 3: Aufbau einer Box
- Fig. 4: Blockschaltbild einer Box
- Fig. 5: Darstellung des Verfahrensablaufs zwischen 2 Boxen ― Ausgangszustand
- Fig. 6: Darstellung des Verfahrensablaufs zwischen 2 Boxen ― Box in Domain A
- Fig. 7: Darstellung des Verfahrensablaufs zwischen 2 Boxen - Aufbau von Security Associations
- Fig. 8: Darstellung des Verfahrensablaufs zwischen 2 Boxen - Sichere E-Mail-Übertragung

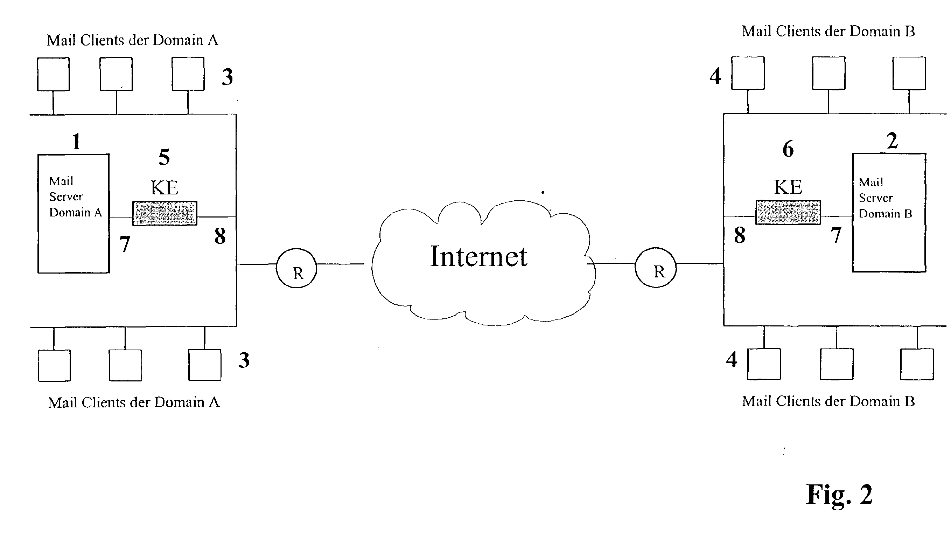

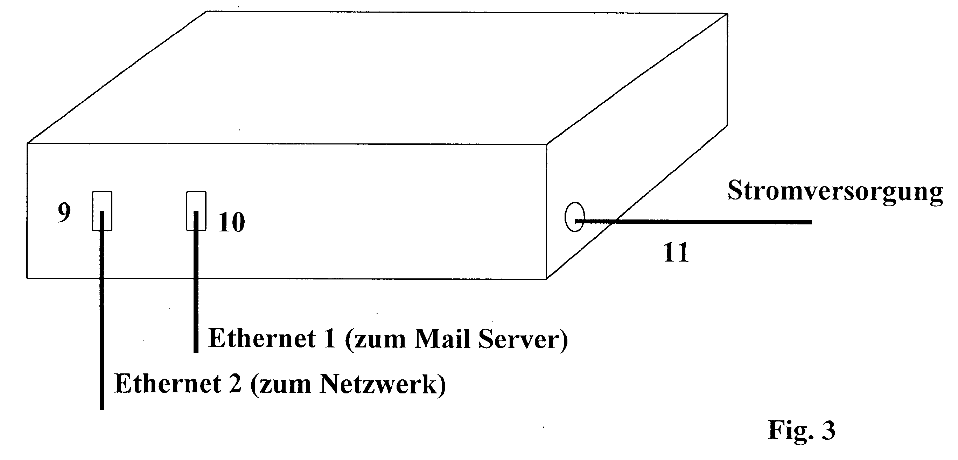

In **Fig. 2** wird die Position der Box (5, 6) in einem Lokalen Netz mit jeweils einem Mail Server für die Domain (1, 2) und entsprechenden Mail Clients (3, 4) dargestellt. Die Box hat jeweils eine Verbindung in Richtung Mail Server (7) und eine Verbindung in Richtung Netzwerk (8). Die entsprechenden Anschlüsse an einer Box sind in **Fig. 3** dargestellt (9, 10). Darüberhinaus verfügt die Box nur noch über einen Anschluß für die Stromversorgung (11).

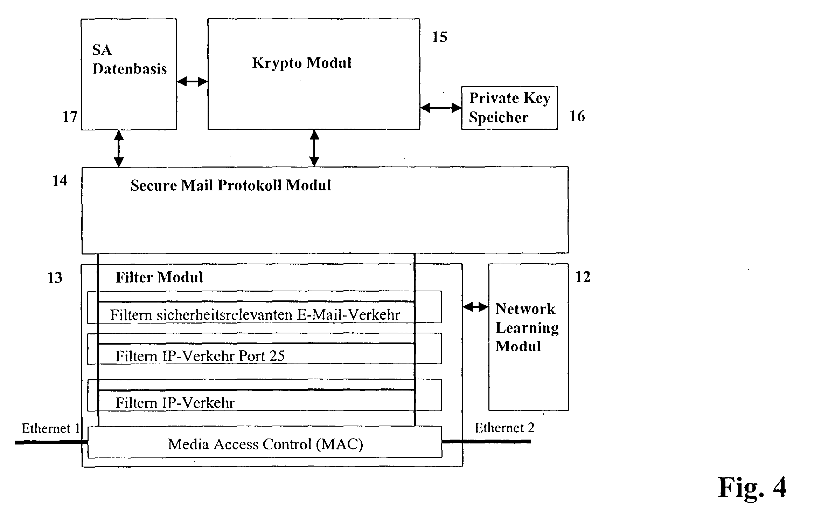

**Fig. 4** zeigt das Blockschaltbild einer Box der Klasse A. Ein Network Learning Modul (12) sorgt dafür, das die Box nach Einschaltung in den Ethernet-Strang zwischen Mail Server (Ethernet 1) und Netzwerk (Ethernet 2) alle notwendigen Netzwerk-Parameter, wie Netzwerk-Adresse, IP-Adresse des Mail Servers, Domain Name, automatisch lerntDer Filter Modul (13) kann auf dieser Basis alle E-Mails herausfiltern, die aus Sicht der sicheren Übertragung relevant sind. Diese E-Mails werden an den Secure Mail Protokoll Modul (14) übergeben. Dieser realisiert das Verfahren unter Zuhilfenahme der SA Datenbasis (17) und des Krypto Moduls (15). Der Krypto Modul greift auf den Private Key Speicher (16) zur Bereitstellung des eigenen Privat Keys und die SA Datenbasis (17) zur Bereitstellung der Public Keys der Partner zurück.

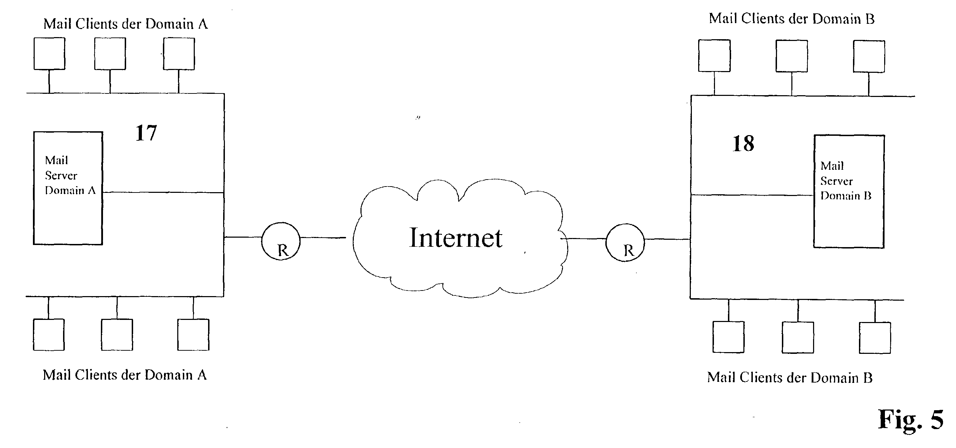

Der Verfahrensablauf ist in **Fig. 5 bis 8** dargestellt. Gesichert werden soll der E-Mail-Verkehr zwischen allen Mail Clients der Mail Domain A (17) und Mail Domain B (18). Die Ausgangssituation ist in Fig. 5 dargestellt.

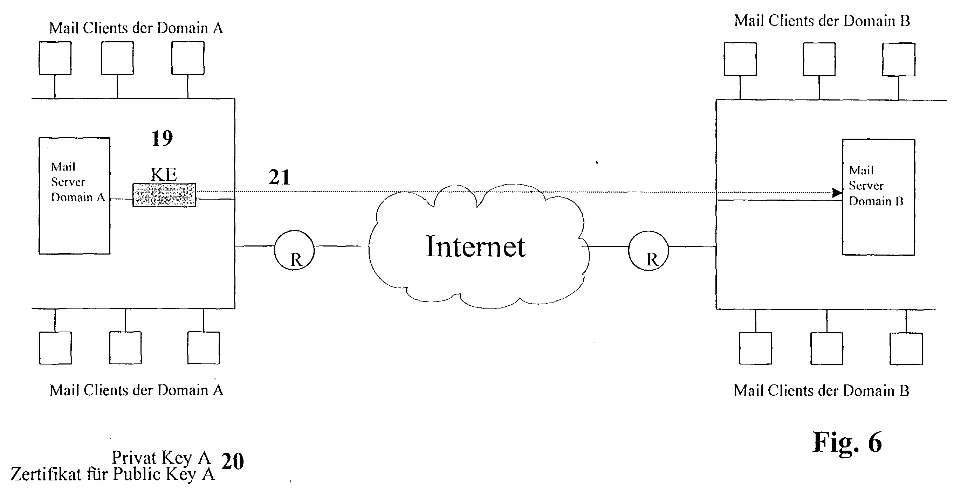

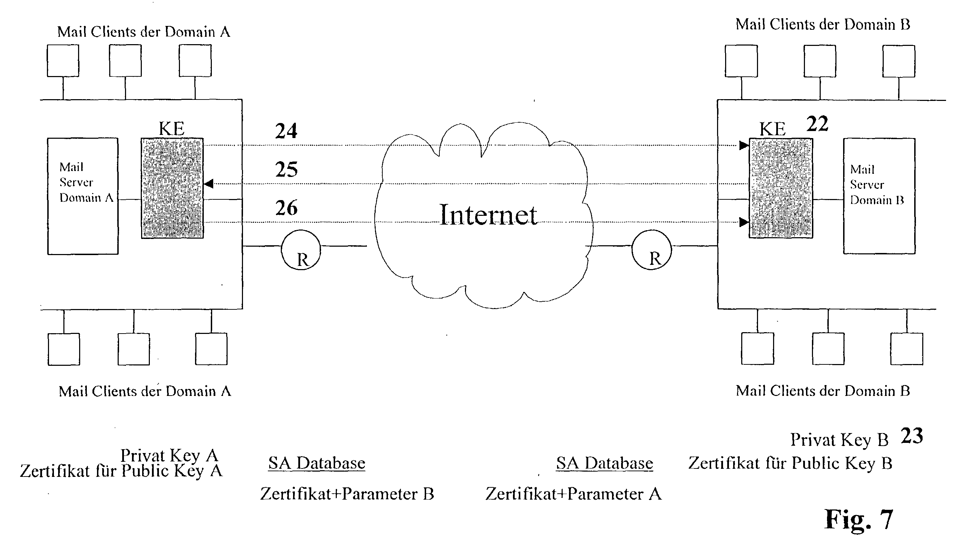

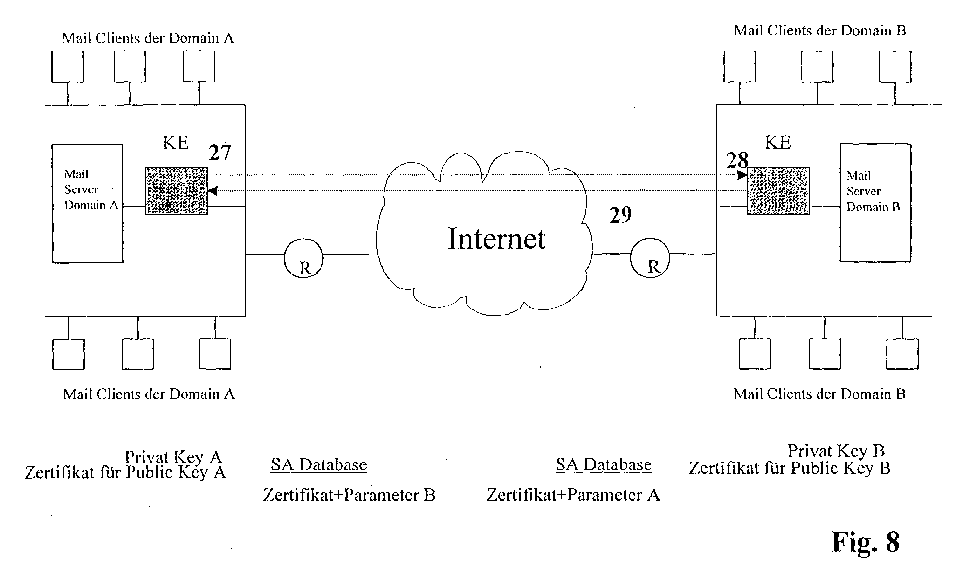

Nachdem, wie in **Fig. 6** dargestellt, eine Box (19) im Bereich der Mail Domain A zwischen dem für die Domain A zuständigen Mail Server und das Netzwerk gesteckt wurde, lernt die Box die konkrete Netzwerkumgebung und erzeugt ein Schlüsselpaar (20). Die SA Datenbasis enthält zu diesem Zeitpunkt noch keinen Eintrag. Jede E-Mail an einen Client der Domain B oder einen beliebigen anderen Client außerhalb der Domain wird von der Box aus dem Datenstrom herausgefiltert und erhält vor Weiterleitung eine spezielle Kennung im Kopf. Eine E-Mail an einen Client der Domain B (21) wird an den Mail Client übergeben, wobei die Kennung für diesen transparent ist. Der gleiche Ablauf gilt für die Installation einer Box im Bereich der Domain B (22, 23) nach **Fig. 7.** Für den Verfahrensablauf wird davon ausgegangen, daß beide Boxen ihren Public Key durch eine vertrauenswürdige Dritte Instanz zertifizieren lassen. Dies kann z.B. in der Box selbst, auf Basis gesicherter E-Mail an einen Zertifikat-Server oder durch ein externes Zertifikat (z.B. Smartcard, SmartCD) erfolgen. Für das Verfahren selbst hat die Art und Weise der Beschaffung des Zertifikates jedoch keine Bedeutung. Trifft nun eine mit einer Kennung versehene E-Mail aus der Domain A (24) auf die Box in der Domain B, so wird durch diese Box die Kennung erkannt und der Prozeß des Aufbaus von Security Associations (SA) und der Austausch von Zertifikaten eingeleitet. Dazu sendet die Box der Domain B ihr Zertifikat und ihre Sicherheitsparameter per gesicherter E-Mail an die Box A (25). Diese macht damit ihren ersten Eintrag in der SA Datenbasis und schickt ihr Zertifikat und ihre Sicherheitsparameter per gesicherter E-Mail an die Box B (26). Im Ergebnis dessen existieren Security Associations zwischen A und B in beiden Richtungen (siehe **Fig. 8**). Sendet nun ein Mail Client der Domain A eine E-Mail an einen Mail Client der Domain B (27), so wird diese E-Mail durch die Box A aus dem Datenstrom herausgefiltert und die Verfügbarkeit einer Security Association zu Domain B erkannt. Die originale Mail wird mit Hilfe des Public Key der Domain B verschlüsselt, mit Hilfe des Privat Key der Domain A signiert und versehen mit einem neuen Kopf unter Verwendung virtueller Benutzernamen an die Box B gesendet. Box B filtert die gesicherte E-Mail aus dem Datenstrom (28), entschlüsselt die E-Mail mit ihrem Privat Key und prüft den Inhalt der E-Mail über die digitale Signatur. Die wiederhergestellte offene E-Mail wird an den Mail Server der Domain B weitergeleitet. Der entsprechende Ablauf gilt für die Versendung von E-Mail zwischen der Domain B und A (29). Auf diese Art und Weise werden auch alle weiteren Boxen gelernt, die bereits in anderen Domains arbeiten bzw. neu installiert werden.

## Patentansprüche

1. Verfahren zum Aufbau von gesicherten E-Mail-Verkehr zwischen Domänen am Internet unter Nutzung von Security Associations , wobei
die Daten mindestens eine Kommunikationseinrichtung durchlaufen, die über ein Verzeichnis von Security Associations verfügt,
die Kommunikationseinrichtung der Sende-Domain den Namen der Ziel-Domain jeder der vom Mail-Server der eigenen Domain erhaltenen E-Mail gegen ein Verzeichnis von existierenden Security Associations prüft,
und bei fehlendem Eintrag einer Security Association
die E-Mail mit einer Kennung der Kommunikationseinrichtung versehen und an den Empfänger weitergeleitet wird,
empfängerseitig die E-Mail unverändert an den Empfänger übergeben wird, wenn keine artgleiche Kommunikationseinrichtung vorhanden ist,
empfängerseitig beim Auftreffen auf eine artgleiche Kommunikationseinrichtung die empfangene E-Mail von der empfangenden Kommunikationseinrichtung auf eine Kennung geprüft und an den Empfänger unverändert weitergeleitet wird,
eine empfangene Kennung zur Übertragung der Sicherheitsparameter der eigenen Domain an die Kommunikationseinrichtung der Sender-Domain über E-Mail führt,
empfangene Sicherheitsparameter zur Übertragung der eigenen Sicherheitsparameter der Domain an die Kommunikationseinrichtung der jeweils anderen Domain über E-Mail führt, sofern diese nicht bereits übertragen wurden,
der Empfang von Sicherheitsparametern zur Eintragung dieser in das Verzeichnis von Security Associations führt,
und bei existierendem Verzeichniseintrag
die E-Mail auf Basis der Sicherheitsparameter der Security Association durch die Kommunikationseinrichtung gesichert an die Ziel-Domain gesendet wird, und
die Kommunikationseinrichtung der Ziel-Domain auf Basis der Sicherheitsparameter der Security Association die Sicherung der E-Mail rückgängig macht und diese an den für die Domain zuständigen Mail Server weiterleitet.

2. Verfahren nach Anspruch 1, dadurch gekennzeichnet,
daß bei fehlendem Verzeichniseintrag
die Kommunikationseinrichtung per E-Mail den Aufbau einer Security Association anfordert,
bei Zustandekommen einer Security Association die E-Mail gesichert überträgt,
bei Nichtzustandekommen einer Security Association die E-Mail an den Absender als nicht gesichert zustellbar zurückgegeben wird.

3. Verfahren nach Anspruch 1, dadurch gekennzeichnet,
daß bei existierendem Verzeichniseintrag
die Kommunikationseinrichtung per E-Mail die momentane Verfügbarkeit einer Security Association abfragt,
bei Verfügbarkeit einer Security Association die E-Mail gesichert überträgt,
bei Nichtverfügbarkeit einer Security Association die E-Mail an den Absender als nicht gesichert zustellbar zurückgegeben wird.

4. Verfahren nach jeweils einem der Ansprüche 1 bis 3, dadurch gekennzeichnet, daß durch Angabe einer zusätzlichen Markierung in der E-Mail der Benutzer eine Nachricht zum Ablauf des Verfahrens erhält.

5. Verfahren nach jeweils einem der Ansprüche 1 bis 4, dadurch gekennzeichnet, daß bei Verfügbarkeit einer Security Association die Datenkommunikation zwischen Benutzer und Kommunikationseinrichtung auf direktem Weg und über eine gesicherte Verbindung erfolgt.

6. Kommunikationseinrichtung zum Aufbau von gesicherten E-Mail-Verkehr zwischen Domänen am Internet unter Nutzung von Security Associations, bestehend aus Schnittstellenmodulen, einem Prozessor, einem Arbeitsspeicher und Programmspeicher, einem Kryptomudul, einer Stromversorgung, sowie entsprechenden elektrischen Verbindungen und einem Bus für den Adress- und Datenaustausch, dadurch gekennzeichnet,
daß sie zwei Schnittstellen besitzt, über welche sie in das Netzwerk in der Schnittstelle (1) zwischen Netzwerk und Mail-Server oder in der Schnittstelle (2) zwischen Netzwerk und Router eingebunden ist,
dass sie geeignet ist, für die Kommunikation benötigte Parameter aus dem Datenstrom (IP-Adressen, Namen, Routen) zu entnehmen,
daß sie sich durch Autokonfiguration und Selbstlernen von Netzwerkparametern in das existierende Netzwerk ohne Änderungen an Netzkomponenten einfügt,
daß sie durch Filtermechanismen E-Mails oder Datenpakete von E-Mails aus dem Datenstrom selektieren kann,
daß sie über ein Verzeichnis für Security Associations verfügt,
daß sie durch Autokonfiguration und Selbstlernen von Sicherheits-parametern entsprechend des Verfahrens nach jeweils einem der Ansprüche 1 bis 4 mit artgleichen Kommunikationseinrichtungen gesicherte E-Mails austauschen kann.

7. Kommunikationseinrichtung zum Aufbau von gesicherten E-Mail-Verkehr zwischen Domänen am Internet unter Nutzung von Security Associations, bestehend aus einem Mail-Server bzw. Internet Server mit integriertem Mail Server und Kryptomodul, dadurch gekennzeichnet,
daß sie über eine interne Mail-Schnittstelle E-Mails mit dem Mail Server austauschen kann,
daß sie über ein Verzeichnis für Security Associations verfügt,
daß sie durch Autokonfiguration und Selbstlernen von Sicherheitsparametern entsprechend des Verfahrens nach jeweils einem der Ansprüche 1 bis 4 mit artgleichen Kommunikationseinrichtungen gesicherte E-Mails austauschen kann.

8. Kommunikationseinrichtung zum Aufbau von gesicherten E-Mail-Verkehr zwischen Domänen am Internet unter Nutzung von Security Associations, bestehend aus einem IP-fähigen Gerät, dadurch gekennzeichnet,
daß sie durch Filtermechanismen Datenpakete von E-Mails aus dem Datenstrom selektieren kann,
daß sie über ein Verzeichnis für Security Associations verfügt,
daß sie durch Autokonfiguration und Selbstlernen von Sicherheitsparametern entsprechend des Verfahrens nach jeweils einem der Ansprüche 1 bis 4 mit artgleichen Kommunikationseinrichtungen gesicherte E-Mails austauschen kann.
